# EUROPÄISCHE PATENTSCHRIFT

(11) **EP 0 815 173 B1**
(45) Veröffentlichungstag und Bekanntmachung des Hinweises auf die Patenterteilung: **31.05.2000**
(21) Anmeldenummer: 96906747.9
(22) Anmeldetag: 07.03.1996
(51) Int. Cl.: C09B 67/48, C09B 67/10, C09B 67/38, C09B 41/00

(54) **FÄRBESTABILE MONOAZOFARBSTOFFE, DEREN HERSTELLUNG UND VERWENDUNG**
MONOAZO DYES STABLE UNDER DYEING CONDITIONS, THEIR PRODUCTION AND USE
COLORANTS MONOAZOIQUES STABLES PENDANT LE PROCEDE DE TEINTURE, LEUR PREPARATION ET LEUR UTILISATION

(30) Priorität: 20.03.1995 DE 19510097; 20.12.1995 DE 19547637
(43) Veröffentlichungstag der Anmeldung: 07.01.1998
(73) Patentinhaber: DyStar Textilfarben GmbH & Co. Deutschland KG, 60007 Frankfurt am Main (DE); DyStar Japan Ltd., Osaka-shi, Osaka 541 (JP)
(72) Erfinder: BÜHLER, Ulrich, D-63755 Alzenau (DE); KRUSE, Hubert, D-61462 Königstein (DE); ZORN, Heinz, G., D-50676 Köln (DE); WANKEN, Klaus-Wilfried, D-51373 Leverkusen (DE)
(74) Vertreter: Zobel, Manfred, Dr.
(86) Internationale Anmeldenummer: EP9600970
(87) Internationale Veröffentlichungsnummer: WO9629368

(56) Entgegenhaltungen:
- EP-A- 0 240 902
- EP-A- 0 651 026
- DD-A- 208 477
- DE-A- 1 544 451
- FR-A- 1 450 955
- FR-A- 2 255 352
- FR-A- 2 304 650

## Beschreibung

Die vorliegende Erfindung betrifft neue färbestabile Kristallmodifikationen des Farbstoffs der Formel (I) 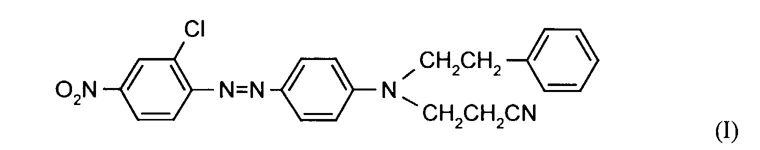 sowie ein Verfahren zu ihrer Herstellung.

Aus FR-A 2 255 352 sind wasserunlösliche Azofarbstoffe in einer bestimmten Kristallmodifikation bekannt, die durch einen Formierungsprozeß erhalten werden.

FR-A 2 304 650 beschreibt färbestabile Monoazofarbstoffe in der β-Modifikation sowie Verfahren zu deren Herstellung und deren Verwendung zum Färben von synthetischen und halbsynthetischen Fasermaterialien.

Aus DD 208 477 sind Verfahren zur Herstellung färbestabiler Modifikationen von Dispersionsazofarbstoffen bekannt wobei die Azokupplung in Gegenwart von Polymerisationsprodukten des Ethylenoxids oder/und ethoxylierter Fettalkohole bzw. Fettsäuren erfolgt.

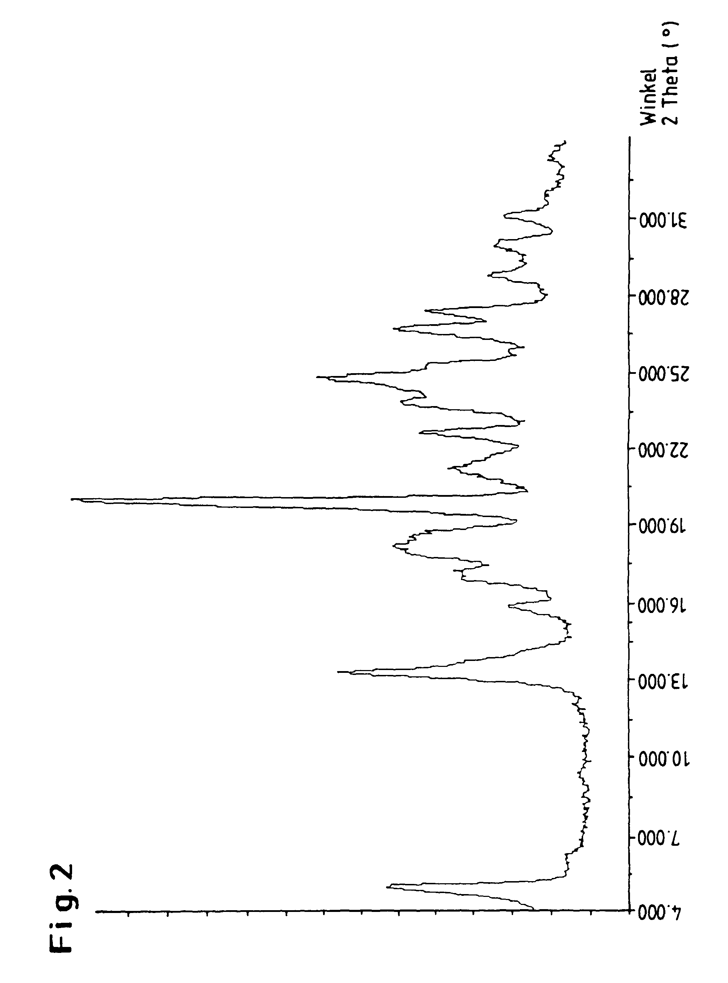

Der Farbstoff der Formel (I) ist an sich bekannt. Er kann auf die in DE-A-15 44 451 beschriebene Weise durch Diazotieren von 2-Chlor-4-nitroanilin und Kuppeln auf N-(2-Cyanethyl)-N-(2-phenylethyl)anilin in wäßrig-mineralsaurem Medium erhalten werden. Dabei fällt er aber in einer instabilen Kristallmodifikation ("α-Modifikation") an, deren Röntgenbeugungsdiagramm (Cu-K_{α}-Strahlung) in Figur 2 wiedergegeben ist und die charakterisiert ist durch Linien bei folgenden Beugungswinkeln 2 θ (°): Linien starker Intensität:
4,8; 13,2; 18,1; 19,8; 23,9; 24,7; 26,7;

Linien mittlerer Intensität:
15,8; 17,1; 21,2; 22,6; 27,3; 28,8; 30,0; 31,1.

In dieser färbeinstabilen Modifikation fällt der Farbstoff der Formel (I) auch an, wenn nach dem in der EP-A-240 902 beschriebenen Verfahren die Kupplung in Gegenwart eines speziellen Carbonsäureesters, z.B. Butylacetat, erfolgt.

Die Verwendung derartiger aliphatischer Carbonsäureester, insbesondere Butylacetat, hat zudem den Nachteil, daß die Kesselbeschichtungen, insbesondere Kessel gummierungen, angegriffen und auf diese Weise solche Kessel nachhaltig beschädigt werden. Der herzustellende Farbstoff wird dabei verunreinigt.

Pulver- und Flüssigpräparationen, die aus dem Farbstoff in der instabilen Kristallmodifikation hergestellt werden, weisen erhebliche technische Mängel auf, insbesondere bei ihrer Handhabung, jedoch auch bereits bei ihrer Herstellung sowie auch beim Färben von textilen Polyestermaterialien. Technische Mängel bei ihrer Handhabung treten beispielsweise bei der Redispergierung dieser Präparationen auf, d.h. bei ihrer Einarbeitung in Färbeflotten und Druckpasten. Probleme wie Sedimentation, Agglomeration, Phasentrennung sowie kittiger Bodensatz treten insbesondere auf, wenn diese Präparationen in redispergierter Form in modernen Farbküchen eingesetzt werden.

Aufgabe der vorliegenden Erfindung war es, färbestabile Farbstoffmodifikationen sowie Verfahren zu deren Herstellung bereitzustellen.

Es wurden neue färbestabile Kristallmodifikationen ("y-Modifikation und β-Modifikation") des Farbstoffs der Formel (I) gefunden, 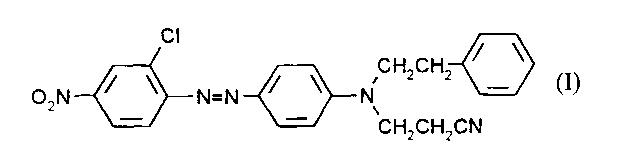 die im Röntgenbeugungsdiagramm (Cu-K_{α}-Strahlung) jeweils Linien bei folgenden Beugungswinkeln 2 e (°) aufweisen:

### γ-Modifikation

Linien starker Intensität:
11,57; 14,90; 17,14; 20,64; 24,35; 25,05; 26,37;

Linien mittlerer Intensität:
10,26; 13,71; 16,81; 18,71; 20,94; 22,07; 23,84; 28,81; 29,69.

### β-Modifikation

Linien starker Intensität:
4,9; 13,95; 17,15; 19,5; 21,85; 25,2; 26,05; 28,75;

Linien mittlerer Intensität:
16,0; 24,3; 27,3; 30,0; 31,15.

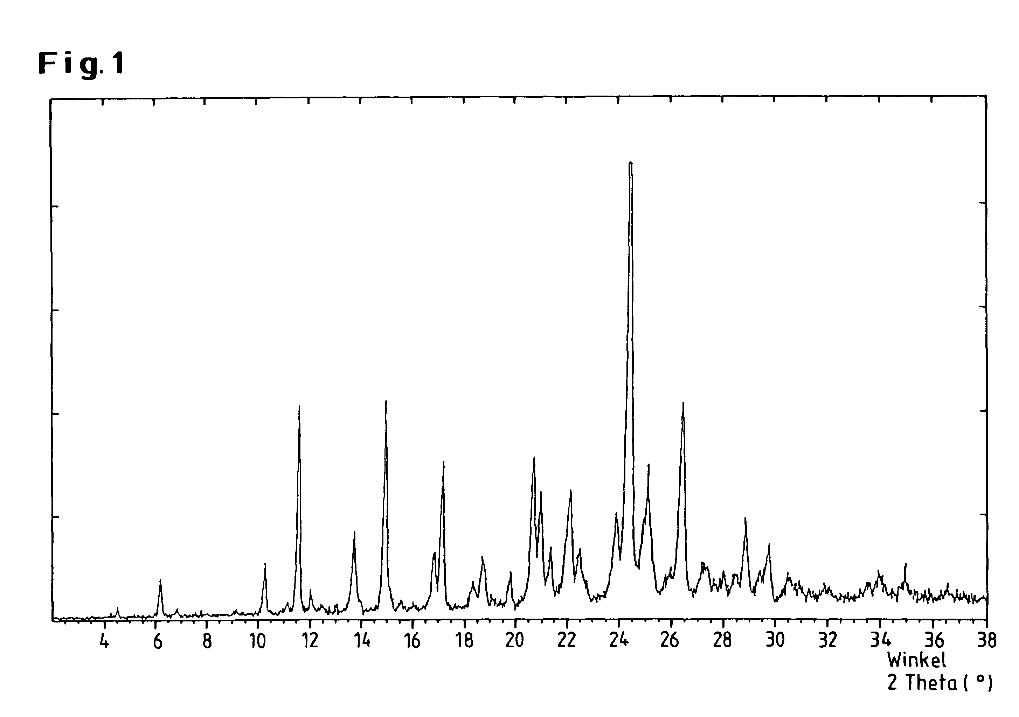

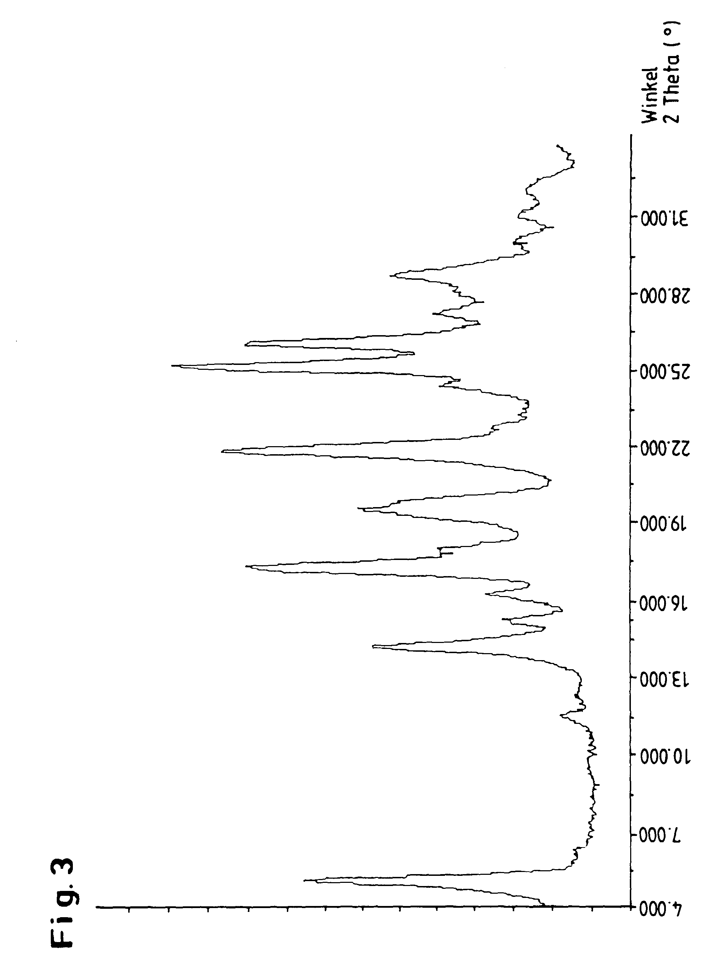

Das mit Cu-K_{α}-Strahlung aufgenommene Röntgenbeugungsdiagramm der färbestabilen γ-Modifikation ist in Figur 1 und das der β-Modifikation in Figur 3 dargestellt. Zur Aufnahme wurde ein rechnergesteuertes Siemens D 500-Pulverdiffraktometer benutzt.

Problemlos läßt sich der Farbstoff einsetzen, wenn er in der erfindungsgemäßen β-oder γ-Modifikation vorliegt Mit dieser β- oder γ-Modifikation lassen sich bei der Herstellung von Pulver- oder Granulatpräparationen höhere Raum-Zeit-Ausbeuten erzielen, und Färbungen auf Stückware und Wickelkörpern fallen stippenfrei bzw. ohne Farbstoffablagerungen, also homogen, an.

Die erfindungsgemäße β-Modifikation kann durch Erhitzen des Farbstoffs, der in der α-Modifikation vorliegt, in wäßriger Phase auf Temperaturen von vorzugsweise 70 bis 150°C, insbesondere 90 bis 130°C, erhalten werden. In der Regel erfolgt dieses Erhitzen in wäßriger Suspension, zweckmäßigerweise unter Rühren. Liegen die anzuwendenden Temperaturen über dem Siedepunkt der wäßrigen Phase, wird die Umwandlung in die β-Modifikation in geschlossenen Gefäßen, beispielsweise Autoklaven, ausgeführt. Erhitzt wird so lange, bis die α-Modifikation vollständig in die β-Modifikation überführt ist.

Die vollständige Überführung der α- in die β-Modifikation nimmt in der Regel 0.5 bis 5 Stunden in Anspruch, wobei eine Reaktionskontrolle durch röntgenographische oder mikroskopische Untersuchung von während der Hitzebehandlung entnommenen Proben erfolgen kann.

Bei der Überführung der α- in die β-Modifikation kann ein Zusatz einer oder mehrerer oberflächenaktiver Substanzen zu der wäßrigen Phase zweckmäßig sein. Diese oberflächenaktiven Substanzen können benetzend, viskositätsmindernd, dispergierend oder anlösend wirken und anionischer, kationischer oder nichtionischer Natur sein.

Geeignete oberflächenaktive Substanzen sind z.B. Alkalisalze wie Ligninsulfonaten, Alkalisalze der Kondensationsprodukte aus Naphthalinsulfonsäuren und Formaldehyd, Polyvinylsulfonate, oxethylierte Novolake, oxethylierte Fettalkohole. Fettsäurepolyglykolester und tertiäre Phosphorsäureester. Die oberflächenaktiven Substanzen können einzeln oder in Kombination miteinander verwendet werden Die Menge an oberflächenaktiver Substanz, bezogen auf die Menge an Farbstoff der Formel (I) in der α-Modifikation, beträgt in der Regel 0.01 bis 400 Gew.-% und hängt von der Weiterverarbeitung ab.

Nach der Überführung in die β-Modifikation kann der Farbstoff beispielsweise durch Filtration aus der wäßrigen Suspension isoliert werden. Zur Vermeidung einer Belastung des Abwassers und um Ausbeuteverluste zu vermeiden, werden hierbei in der Regel nur 0,01 bis 10 Gew.-%, vorzugsweise 0,1 bis 1 Gew.-% der oberflächenaktiven Substanzen eingesetzt.

Es ist jedoch auch möglich, den Farbstoff unmittelbar nach der Wärmebehandlung ohne Zwischenisolierung zu finishen, das heißt, in die handelsüblichen Pulver- oder Flüssigpräparationen zu überführen. Zu diesem Zweck wird die wärmebehandelte Suspension durch Mahlung in eine Dispersion überführt. Es ist dabei bevorzugt, die Wärmebehandlung in Gegenwart derjenigen Dispergier- und gegebenenfalls auch Hilfsmittel durchzuführen, die in der gefinishten Pulver- oder Flüssigpräparation enthalten sein sollen, oder in Gegenwart eines Teils dieser Mittel. Diese Dispergiermittel sind mit den oben genannten oberflächenaktiven Substanzen identisch. Wurde während der Wärmebehandlung nicht die Gesamtmenge dieser Dispergier- und Hilfsmittel zugesetzt, so wird vor der Mahlung die Restmenge zugegeben. Zur Wärmebehandlung werden in diesem Falle in der Regel 10 bis 400 Gew.-%, vorzugsweise 20 bis 200 Gew.-%, oberflächenaktive Substanzen, bezogen auf die Farbstoff in der α-Modifikation, zugegeben

Die Überführung der α- in die β-Modifikation durch Wärmebehandlung in wäßriger Phase kann auch unter Zusatz eines oder mehrerer organischer Lösungsmittel erfolgen. Diese organischen Lösungsmittel können entweder mit Wasser in jedem Verhältnis mischbar sein oder sich nicht oder aber nur wenig mit Wasser mischen

Mit Wasser mischbare Lösungsmittel sind beispielsweise Ethanol, i-Propanol und Dimethylsulfoxid (DMSO). Mit Wasser nicht oder nur wenig mischbare Lösungsmittel sind beispielsweise n-Butanol, Butylacetat und Toluol

Die Temperaturen für die Hitzebehandlung in wäßriger Phase unter Zusatz von organischen Lösungsmitteln liegen vorzugsweise zwischen 70 und 150°C In Abhängigkeit von der Temperatur der Hitzebehandlung bzw. des Siedepunkts des zugesetzten organischen Lösungsmittels kann es erforderlich sein, die Hitzebehandlung unter Druck, z.B. in einem Autoklaven, durchzuführen. Die Dauer der Hitzebehandlung richtet sich u.a. nach dem Lösevermögen der flüssigen Phase, also u.a. auch nach dem Lösevermögen des zugesetzten organischen Lösungsmittels und nach dessen Mengenanteil.

Die Menge an organischen Lösungsmitteln, bezogen auf die wäßrige Phase, kann in weiten Grenzen variieren. Bei mit Wasser mischbaren Lösungsmitteln kann sie zwischen 5 und 95 Gew.-%, vorzugsweise zwischen 10 und 50 Gew.-%, liegen. Bei mit Wasser wenig oder nicht mischbaren Lösungsmitteln liegt sie im allgemeinen zwischen lund 25 Gew.-%, vorzugsweise bei 2 bis 10 Gew.-%.

Nach der Überführung in die β-Modifikation wird das organische Lösungsmittel in der Regel durch Destillation oder Wasserdampfdestillation von der Farbstoffsuspension abgetrennt und der Farbstoff aus wäßriger Phase durch Filtration isoliert. Der Farbstoff kann jedoch auch aus dem Lösungsmittelgemisch direkt durch Filtration isoliert werden.

Vorteilhaft ist es, beim Erhitzen des Farbstoffs in wäßriger Phase, sowohl einer rein wäßrigen als auch einer organische Lösungsmittel enthaltenden Phase, den pH-Wert der Wasserphase auf 6 bis 8 einzustellen und bei diesem pH-Wert zu halten, da es sonst zu Farbstärkeverlusten und Farbtonabweichungen kommen kann.

Der in der α-Modifikation vorliegende Farbstoff der Formel (I) kann auch durch Umkristallisation in die β-Modifikation überführt werden. Als Lösungsmittel können dabei organische Lösungsmittel, Mischungen von organischen Lösungsmitteln oder auch Mischungen von wassermischbaren organischen Lösungsmitteln mit Wasser dienen. Geeignete organische Lösungsmittel sind beispielsweise Ethanol, Butylacetat oder Toluol.

Sinnvollerweise wird die umzuwandelnde α-Modifikation in dem gewählten Lösungsmittel durch Erwärmen gelöst, worauf beim Abkühlen die β-Modifikation auskristallisiert. Alternativ kann die β-Modifikation durch Zugabe eines schlechter lösenden Lösungsmittels, zum Beispiel Wasser, aus der Lösung ausgefällt werden

Der erhaltene Farbstoff in der β-Modifikation kann durch Filtration aus dem Lösungsmittel isoliert werden. Es ist aber auch möglich, das Lösungsmittel, z.B nach Wasserzusatz, durch Destillation oder Wasserdampfdestillation auszutreiben und anschließend den Farbstoff durch Filtration aus wäßriger Phase zu isolieren

Es ist auch möglich, die Umwandlung der α- in die β-Modifikation unmittelbar nach der Kupplung durch Wärmebehandlung der Kupplungssuspension auszuführen. Dies kann im gleichen Reaktionsgefäß wie die Kupplung erfolgen. Um eine Verseifung des Farbstoffs zu verhindern, wird dabei vorzugsweise die aus der Diazotierung und Kupplung stammende Mineralsäure, vorzugsweise H₂SO₄, zuvor in der Kupplungssuspension gänzlich oder weitgehend neutralisiert.

Schließlich kann die β- wie auch die γ-Modifikation auch direkt bei der Kupplung erhalten werden, d.h. ohne jegliche Wärmebehandlung, wenn die Kupplung des diazotierten 2-Chlor-4-nitro-anilins auf N-(2-Cyanethyl)-N-(2-phenylethyl)anilin in Gegenwart geeigneter Hilfsstoffe durchgeführt wird.

Es ist bekannt, bei der Herstellung von Azofarbstoffen die Kupplung in Gegenwart von Hilfsstoffen durchzuführen, durch die die Filtrierbarkeit des bei der Kupplung anfallenden Farbstoffs und der Pastengehalt des nach der Filtration vorliegenden Filterkuchens verbessert wird, ohne daß eine Hitzebehandlung notwendig wird. So wird bei einem in der tschechoslowakischen Patentschrift 138 534 beschriebenen Verfahren zur Herstellung von bestimmten Azofarbstoffen zur Verbesserung der Filtrierbarkeit z.B. ein Addukt von Ethylenoxid an einen C₈-C₁₆-Alkohol oder ein sulfatiertes Ethylenoxidaddukt an einen solchen Alkohol bei der Kupplung zugesetzt. Es gibt aber keinen Hinweis, daß durch diesen Zusatz die Kristallmodifikation beeinflußt wird.

Nach dem Verfahren der bereits oben erwähnten EP-A-240 902 wird zur Verbesserung der Filtrierbarkeit die Kupplung in Gegenwart eines Esters einer gegebenenfalls substituierten niederaliphatischen Carbonsäure und eines gegebenenfalls substituierten aliphatischen Alkohols durchgeführt, wobei zusätzlich zu dem Ester bei der Kupplung auch noch oberflächenaktive Substanzen, beispielsweise Ligninsulfonate, zugegen sein können. Nachteilig an diesem Verfahren ist aber speziell im Hinblick auf den Farbstoff der Formel (I), daß er dabei in der färbeinstabilen α-Modifikation anfällt, und allgemein, daß durch die Einwirkung des Esters auf gummierte Kesselinnenwände die Gummibeschichtung aufquillt und langfristig zerstört wird sowie daß wegen der Explosionsfähigkeit der Ester/Luft-Gemische und wegen der Geruchsbelästigung durch den leichtflüchtigen Ester aufwendige apparative Maßnahmen erforderlich sind.

Überraschenderweise wurde nun ein Verfahren gefunden, bei dem der Farbstoff der Formel (I) in einer färbestabilen β- oder γ-Modifikation in gut filtrierbarer Form bei der Kupplung von diazotiertem 2-Chlor-4-nitroanilin auf N-(2-Cyanethyl)-N-(2-phenylethyl)anilin anfällt, das dadurch gekennzeichnet, daß die Kupplung, in Gegenwart eines oder mehrerer Hilfsstoffe aus der Reihe der tertiären Phosphorsäureester von Fettalkoholen und/oder Fettalkoholpolyethylenglykolethern; der tertiären Phosphorsäureester von Fettalkoholpolyethylenglykolethern und/oder Polyethylenglykolen; der Fettalkoholpolyethylenglykolether; der Fettsäurepolyethylenglykolester; der Tributylphenylpolyethylenglykolether; und der Nonylphenylpolyethylenglykolether und in Abwesenheit eines Esters aus einer gegebenenfalls substituierten niederaliphatischen Carbonsäure und eines gegebenenfalls substituierten aliphatischen Alkohols erfolgt.

Die erfindungsgemäß einsetzbaren Kupplungshilfsstoffe sind oberflächenaktive Substanzen. Sie sind bekannt und können nach bekannten Methoden hergestellt werden. Die technisch hergestellten Produkte sind vielfach Substanzgemische und können in dieser handelsüblichen Form eingesetzt werden.

Im Rahmen der vorliegenden Erfindung sind unter Fettalkoholen, von denen sich die genannten Kupplungshilfsmittel zum Teil ableiten, bevorzugt C₁₀- bis C₁₈-Alkohole, besonders bevorzugt C₁₄- bis C₁₈-Alkohole, zu verstehen, die auf gesättigte oder ungesättigte, geradkettige oder verzweigte aliphatische Kohlenwasserstoffe zurückgehen, wobei Basis für ein Kupplungshilfsmittel nicht nur ein einzelner Fettalkohol mit bestimmter Kohlenstoffatomzahl sein kann, sondern ebenso ein Gemisch von Alkoholen mit beispielsweise unterschiedlichen Kohlenstoffatomzahlen und/oder unterschiedlichem Sättigungsgrad in beliebigen Mengenverhältnissen. Geeignet als Basis für die erfindungsgemäßen Hilfsmittel sind beispielsweise Laurylalkohol, Myristylalkohol, Palmitylalkohol, Stearylalkohol, der ungesättigte Oleylalkohol, gesättigte Kokosfettalkohole mit 10 bis 18 Kohlenstoffatomen, gesättigte Talgfettalkohole mit 16 bis 18 Kohlenstoffatomen oder ein oleylalkoholhaltiges Gemisch mit 16 bis 18 Kohlenstoffatomen. Im folgenden wird für den gesättigten oder ungesättigten (C₁₀-C₁₈)-Kohlenwasserstoffrest von Fettalkoholen die Bezeichnung R⁰ verwendet, Fettalkohole haben dann also die Formel R⁰OH.

Die Polyethylenglykoleinheiten, die in den genannten Kupplungshilfsmitteln enthalten sind, gehen auf die Polyethylenglykole der Formel H(OCH₂CH₂)ₙOH zurück, aus denen formal durch Veretherung und/oder Veresterung an einer oder beiden Hydroxygruppen die Kupplungshilfsmittel erhalten werden. Bei der technischen Herstellung der Kupplungshilfsmittel wird die Polyethylenglykoleinheit insbesondere durch Umsetzung, z.B. eines Fettalkohols, mit Ethylenoxid eingeführt, wobei die Molzahl Ethylenoxid pro mol zu oxethylierender Substanz in weiten Grenzen variiert werden kann. Bei der technischen Oxethylierung fallen im allgemeinen Gemische von Substanzen mit unterschiedlichem Oxethylierungsgrad an, und die ein technisches Produkt charakterisierende mittlere Molzahl Ethylenoxid pro mol zu oxethylierender Substanz ist vielfach auch keine ganze, sondern eine gebrochene Zahl.

Tertiäre Phosphorsäureester von Fettalkoholen und/oder Fettalkoholpolyethylenglykolethern sind Verbindungen der Formel O=P(OR¹)(OR²)(OR³), in denen die Reste R¹, R² und R³ gleich oder verschieden sein können. Die zugrundeliegenden Alkohole R¹OH, R²OH und R³OH können unabhängig voneinander Fettalkohole der Formel R⁰OH oder Fettalkoholpolyethylenglykolether der Formel R⁰(OCH₂CH₂)ₚOH sein, wobei p bevorzugt eine Zahl von 1 bis 10, besonders bevorzugt eine Zahl von 1 bis 4 ist.

Tertiäre Phosphorsäureester von Fettalkoholpolyethylenglykolethern und/oder Polyethylenglykolen sind Verbindungen der Formel O=P(OR⁴)(OR⁵)(OR⁶), in denen die Reste R⁴, R⁵ und R⁶ gleich oder verschieden sein können. Die zugrundeliegenden Alkohole R⁴OH, R⁵OH und R⁶OH können unabhängig voneinander Fettalkoholpolyethylenglykolether der Formel R⁰(OCH₂CH₂)_{q}OH oder Polyethylenglykole der Formel H(OCH₂CH₂)ᵣOH sein, wobei q bevorzugt eine Zahl von 1 bis 10, besonders bevorzugt eine Zahl von 1 bis 4 ist und r bevorzugt eine Zahl von 2 bis 15, besonders bevorzugt eine Zahl von 5 bis 10 ist

Fettalkoholpolyethylenglykolether sind Verbindungen der Formel R⁰(OCH₂CH₂)ₛOH, in der s bevorzugt eine Zahl von 5 bis 50, besonders bevorzugt eine Zahl von 10 bis 30 ist.

Fettsäurepolyethylenglykolester sind Verbindungen der Formel R⁷CO(OCH₂CH₂)ₜOH, in der t bevorzugt eine Zahl von 5 bis 50, besonders bevorzugt eine Zahl von 10 bis 30 ist. R⁷ ist der gesättigte oder ungesättigte Kohlenwasserstoffrest einer Fettsäure. Bevorzugte Fettsäuren der Formel R⁷COOH sind dabei im Rahmen der vorliegenden Erfindung gesättigte oder ungesättigte C₁₀- bis C₂₀-Fettsäuren, besonders bevorzugt sind C₁₆- bis C₁₉-Fettsäuren. Beispiele für geeignete Fettsäuren sind Myristinsäure, Palmitinsäure, Stearinsäure oder Ölsäure sowie ihre Gemische in beliebigen Mengenverhältnissen.

Tributylphenylpolyethylenglykolether sowie Nonylphenylpolyethylenglykolether sind Verbindungen der Formel Ar(OCH₂CH₂)ᵤOH, in der u bevorzugt eine Zahl von 5 bis 50, besonders bevorzugt eine Zahl von 10 bis 30 ist und Ar einen Tributylphenylrest bzw. einen Nonylphenylrest bedeutet. Bei den zugrundeliegenden Alkylphenolen der Formel ArOH handelt es sich im allgemeinen um technische Produkte, die üblicherweise verschiedene Isomere in unterschiedlichen Mengenverhältnissen enthalten.

Bevorzugt sind als erfindungsgemäße Kupplungshilfsmittel Fettalkoholpolyethylenglykolether.

Die erfindungsgemäßen Kupplungshilfsmittel können als grenzflächenaktive Stoffe auch durch ihren HLB-Wert (hydrophilic lipophilic balance) charakterisiert werden, einer bei Tensiden üblichen Maßzahl, die eine Aussage macht zum Verhältnis von Wasserlöslichkeit und Öllöslichkeit (siehe z.B. Römpps Chemie-Lexikon, 8. Auflage, Stuttgart 1983, Seite 1715). Die HLB-Werte der einzusetzenden Fettalkoholpolyethylenglykolether, Fettsäurepolyethylenglykolester und Tributylphenyl- sowie Nonylphenylpolyethylenglykolether liegen bevorzugt bei 8 bis 18, besonders bevorzugt bei 10 bis 16.

Die Einsatzmengen der erfindungsgemäßen Kupplungshilfsmittel betragen bevorzugt 0,1 bis 10 Gew.-%, besonders bevorzugt 0,5 bis 3 Gew.-%, bezogen auf den bei der Kupplung entstehenden Farbstoff (trocken gerechnet).

Die Durchführung der erfindungsgemäßen Kupplung zur Herstellung des Farbstoffs der Formel (I) in der γ-Modifikation erfolgt vorzugsweise in Gegenwart von HCl, insbesondere in wäßriger Salzsäure.

Der pH-Wert bei der Kupplung liegt vorzugsweise unterhalb von 1,5, insbesondere unterhalb von 1,0. Die eingesetzte wäßrige Salzsäure ist vorzugsweise 15 bis 20 gew.-%ig. Besonders bevorzugt wird die Diazokomponente in Salzsäure mit den üblichen Diazotierungsmitteln, wie Natriumnitrit diazotiert und die erhaltene Lösung oder Dispersion der Diazoniumverbindung wird dann im allgemeinen mit einer Lösung oder Dispersion der Kupplungskomponente vereinigt, wobei die Kupplung in Gegenwart eines oder mehrerer der genannten erfindungsgemäßen Hilfsmittel durchgeführt wird. Daneben können bei der Kupplung auch weitere übliche Hilfsmittel zugegen sein, etwa weitere Dispergiermittel, z.B. solche auf Basis von Ligninsulfonaten, oder von Kondensationsprodukten aus Naphthalinsulfonsäuren und Formaldehyd.

Die Durchführung der erfindungsgemäßen Kupplung zur Herstellung des Farbstoffs der Formel (I) in der β-Modifikation erfolgt vorzugsweise in H₂SO₄. Zunächst wird die Diazokomponente in üblicher Weise diazotiert, z.B. unter Verwendung von Nitrosylschwefelsäure oder eines Alkalimetallnitrits, wie Natriumnitrit, vorzugsweise in H₂SO₄, insbesondere in 50-100 %iger, besonders bevorzugt in 75-95 %iger H₂SO₄, und die erhaltene Lösung oder Dispersion der Diazoniumverbindung wird dann mit einer Lösung oder Dispersion der Kupplungskomponente vereinigt, wobei die Kupplung in Gegenwart eines oder mehrerer der genannten erfindungsgemäßen Hilfsmittel sowie H₂SO₄ durchgeführt wird. Daneben können bei der Kupplung auch weitere übliche Hilfsmittel zugegen sein, etwa weitere Dispergiermittel, z.B. solche auf Basis von Ligninsulfonaten, oder von Kondensationsprodukten aus Naphthalinsulfonsäuren und Formaldehyd.

Vorzugsweise läßt man die Lösung oder Dispersion des Diazoniumsalzes in die Lösung oder Dispersion der Kupplungskomponente einlaufen. Aber auch die umgekehrte Arbeitsweise ist möglich, bei der man die Lösung oder Dispersion der Kupplungskomponente in die vorzugsweise salzsaure bzw. schwefelsaure Lösung oder Dispersion des Diazoniumsalzes einlaufen läßt. Bei beiden Arbeitsweisen wird das erfindungsgemäße Kupplungshilfsmittel vorzugsweise vor Beginn der Kupplung der Lösung oder Dispersion der Kupplungskomponente zugefügt. Es kann jedoch auch vor Beginn der Kupplung der Lösung oder Dispersion des Diazoniumsalzes oder sowohl der Diazo- als auch Kupplungslösung oder -dispersion zugefügt werden. Darüber hinaus kann das Kupplungshilfsmittel aber auch portionsweise oder kontinuierlich während der Kupplung zugefügt werden Die Kupplungstemperatur liegt im allgemeinen im Bereich von 0° bis 35°C, bevorzugt bei 0° bis 20°C. Bei der Durchführung der Kupplung wird üblicherweise direkt, z.B. durch Zugabe von Eis, oder indirekt gekühlt.

Der durch eine Hitzebehandlung oder durch Kristallisation in die β-Modifikation überführte bzw. bei der Kupplung direkt in der β- bzw. γ-Modifikation anfallende Farbstoff der Formel (I) wird im allgemeinen anschließend durch einen Mahlvorgang in eine Dispersion, d.h. in eine flüssige Farbstoffpräparation oder gegebenenfalls nach Trocknung in eine pulverförmige Farbstoffpräparation überführt werden. Dieses Mahlen geschieht beispielsweise in Mühlen, wie z.B. Kugel-, Schwing-, Perl- oder Sandmühlen oder in Knetern. Nach der Mahlung liegt die Größe der Farbstoffteilchen bei ca. 0,1 bis 5 µm. Die Mahlung erfolgt im allgemeinen in Gegenwart von Dispergiermitteln, wie beispielsweise Kondensationsprodukten aus Naphthalinsulfonsäure und Formaldehyd oder Phenol, Formaldehyd und Natriumbisulfit, Alkalisalzen von Ligninsulfonaten oder Sulfitcelluloseablauge oder Polyvinylsulfonaten, die die Oberfläche der mechanisch zerkleinerten Farbstoffteilchen belegen und so ihre Rekristallisation und Agglomeration verhindern. Es kann vorteilhaft sein, neben diesen Dispergiermitteln dem Farbstoff auch andere Hilfsmittel, wie z.B. Netzmittel, Frostschutzmittel, Füllmittel, Entstaubungsmittel, Hydrophilierungsmittel oder Biozide bei der Mahlung zuzusetzen.

Als Dispergiermittel bei der Mahlung kommen insbesondere anionische und/oder nichtionische in Frage. Bevorzugt sind dabei die anionischen Dispergiermittel und besonders bevorzugt ist eine Mischung an anionischen und nichtionischen Dispergiermitteln.

Bei den anionischen Dispergiermitteln haben sich insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und Benzolsulfonsäure, Kondensationsprodukte aus gegebenenfalls substituiertem Phenol mit Formaldehyd und Natriumbisulfit als wirksam erwiesen.

Weiterhin kommen vor allem Ligninsulfonate in Betracht, z.B. solche, die nach dem Sulfit- oder Kraft-Verfahren gewonnen werden. Vorzugsweise handelt es sich um Produkte, die zum Teil hydrolysiert, oxidiert, propoxyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam.

Besonders geeignet sind Ligninsulfonate mit einem durchschnittlichen Molekulargewicht zwischen 1.000 und 100.000, einem Gehalt an aktivem Ligninsulfonat von 80 % oder mehr und vorzugsweise mit niedrigem Gehalt an mehrwertigen Kationen. Der Sulfonierungsgrad kann in weiten Grenzen variieren.

Nichtionische Dispergiermittel oder Emulgatoren sind z.B. Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen und Carbonsäureamiden.

Hierbei handelt es sich z.B. um Ethylenoxid-Addukte aus der Klasse der Umsetzungsprodukte von Ethylenoxid mit
a) gesättigten und/oder ungesättigten Fettalkoholen mit 6 bis 20 C-Atomen; oder
b) Alkylphenolen mit 4 bis 12 C-Atomen im Alkylrest, oder
c) gesättigten und/oder ungesättigten Fettaminen mit 14 bis 20 C-Atomen;
d) gesättigten und/oder ungesättigten Fettsäuren mit 14 bis 20 C-Atomen

Als Ethylenoxid-Addukte sind im einzelnen genannt:
a) Umsetzungsprodukte von gesättigten und/oder ungesättigten Fettalkoholen mit 6 bis 20 C-Atomen, mit 5 bis 30 mol Ethylenoxid,
b) Umsetzungsprodukte von Alkylphenolen mit 4 bis 12 C-Atomen mit 5 bis 20 mol Ethylenoxid;
c) Umsetzungsprodukte von gesättigten und/oder ungesättigten Fettaminen mit 14 bis 20 C-Atomen mit 5 bis 20 mol Ethylenoxid;
d) Umsetzungsprodukte von gesättigten und/oder ungesättigten Fettsäuren mit 14 bis 20 C-Atomen mit 5 bis 20 mol Ethylenoxid.

Bevorzugte feste Farbstoffpräparationen enthalten
- 10 bis 50 Gew.-%: mindestens eines Farbstoffs, der der Formel (I) in der β-oder γ-Modifikation entspricht,
- 10 bis 80 Gew.-%: Ligninsulfonat
- 0 bis 20 Gew.-%: eines Kondensationsprodukts aus Naphthalinsulfonsäure und Formaldehyd
- 0 bis 10 Gew.-%: nichtionisches Tensid
- 0 bis 1,5 Gew.-%: Netzmittel
- 0 bis 1,0 Gew.-%: Entschäumer
- bis 12 Gew.-%: Wasser (Restfeuchte)
- bis 1,5 Gew.-%: Entstaubungsmittel, vorzugsweise auf Mineralölbasis,
bezogen auf die Farbstoffpräparation.

Bevorzugt ist es, die jeweiligen Bestandteile gemeinsam in einer wäßrigen Suspension in einer Perlmühle bis zur gewünschten Feinverteilung zu mahlen. Dabei kann das Entstaubungsmittel vor, während oder nach der Mahlung der Suspension zugegeben werden. Danach wird vorzugsweise sprühgetrocknet.

Der für die Herstellung von Farbstoffpulvern erforderliche Trocknungsprozeß kann in handelsüblichen Zerstäubungstrocknern durchgeführt werden

Die erfindungsgemäßen β- und γ-Modifikationen des Farbstoffs der Formel (I) neigen in pulver- oder granulatförmigen und insbesondere in flüssigen Farbstoffpräparationen nicht zur Agglomeration, und sie benetzen beim Ansetzen von Färbe- und Klotzflotten sowie auch von Druckteigen besser als die α-Modifikation und lassen sich rasch und ohne aufwendiges manuelles oder maschinelles Rühren dispergieren. Die Flotten und Druckteige sind homogen und lassen sich in modernen Farbküchen problemlos verarbeiten, ohne die Düsen der Dosierautomaten zu verstopfen.

Die Flüssigpräparationen neigen nicht zur Phasentrennung und insbesondere nicht zur Sedimentation oder zu kittigem Absetzen. Ein ebenfalls aufwendiges Homogenisieren des Farbstoffs im Gebinde vor der Farbstoffentnahme kann somit entfallen.

Der bei der Pulverherstellung nach der Mahlung des Farbstoffs in Gegenwart des Dispergier- und Hilfsmittel anfallende Mahlteig ist auch bei erhöhter Temperatur und über längere Zeit stabil. Der Mahlteig in den Mühlen wie auch nach Verlassen der Mühlen braucht nicht gekühlt zu werden und läßt sich vor der Sprühtrocknung längere Zeit in Sammelbehältern lagern. Die thermische Stabilität äußert sich auch darin, daß die Sprühtrocknung bei hohen Temperaturen durchgeführt werden kann, ohne daß das zu trocknende Gut agglomeriert. Bei gleicher Trocknerausgangstemperatur bedeutet eine Erhöhung der Eingangstemperatur eine Erhöhung der Trocknerleistung und somit eine Erniedrigung der Fertigungskosten.

Die erfindungsgemäßen β- und γ-Modifikationen des Farbstoffs der Formel (I) eignen sich im Gegensatz zu der α-Modifikation uneingeschränkt zum Färben und Bedrucken von Textilmaterialien aus Polyester, wie Polyethylenglykolterephthalat, und/oder Celluloseestern, wie Celluloseacetaten, oder von Mischgeweben aus diesen Materialien mit Wolle oder Cellulose.

Die Überlegenheit der β- und γ-Modifikationen im Vergleich zur α-Modifikation wird auch beim Färben aus wäßrigem Färbebad unter modernen Praxisbedingungen deutlich. Diese Bedingungen sind gekennzeichnet durch hohe Wickeldichten bei Kreuzspul- und Baumfärbungen, kurze Flottenverhältnisse, also hohe Farbstoffkonzentrationen, sowie hohe Scherkräfte in der Färbeflotte bedingt durch hohe Pumpenleistungen. Auch unter diesen Bedingungen neigen die β- und γ-Modifikationen nicht zur Agglomeration, und es kommt nicht zu Abfiltrationen auf den zu färbenden Textilmaterialien. Es werden also homogene Färbungen ohne Farbstärkeunterschiede zwischen den äußeren und den inneren Lagen der Wickelkörper erhalten, und die Färbungen zeigen keinen Abrieb. Bei Klotzfärbungen und Drucken mit den erfindungsgemäßen β- und γ-Modifikationen schließlich wird ebenfalls ein homogenes, stippenfreies Warenbild erhalten.

### Beispiel 1

a) Zur Herstellung des Farbstoffs der Formel (I) gemäß dem Stand der Technik werden nach dem in der EP-A-240 902 beschriebenen Verfahren zunächst 173 g 2-Chlor-4-nitroanilin in 400 g konzentrierter Schwefelsäure in Lösung gerührt und mit 326 g 40 gew.-%iger Nitrosylschwefelsäure bei 20 bis 30°C diazotiert. Die erhaltene Diazolösung wird bei 20 bis 25°C in 2 Stunden auf eine fein verteilte Suspension aus 250 g N-(2-Cyanethyl)-N-(2-phenylethyl)-anilin, 10 g eines Ligninsulfonat-Dispergiermittels, 750 g Wasser und 20 g Butylacetat unter direkter Kühlung mit Eis gekuppelt. Nach dreistündigem Nachrühren wird der ausgefallene Farbstoff durch Filtration isoliert und mit Wasser neutral gewaschen. Er liegt in dem erhaltenen wasserfeuchten Preßkuchen in der α-Modifikation vor, die das in Figur 2 wiedergegebene Röntgenbeugungsdiagramm aufweist.
b) 100 g des nach la) hergestellten Farbstoffs werden in 500 ml Wasser in Gegenwart von 0,5 g eines Dispergiermittels auf Basis Ligninsulfonat in einem Autoklaven 2 Stunden bei 125°C gerührt. Die Farbstoffsuspension wird danach abgekühlt und erneut filtriert. Der Farbstoff liegt als wasserfeuchter Preßkuchen nun in der β-Modifikation vor, die das in Figur 3 wiedergegebene Röntgenbeugungsdiagramm aufweist.
c) 100 g des nach la) hergestellten Farbstoffs werden mit 50 g eines Natriumligninsulfonats, 50 g eines Kondensationsprodukts aus m-Kresol, Formaldehyd und Natriumbisulfit, 40 g eines Kondensationsprodukts aus m-Kresol, Phenol, Nonylphenol, Formaldehyd und Natriumbisulfit sowie Wasser in einer Sandmühle gemahlen, bis 90 % der Farbstoffteilchen gleich oder kleiner 1 µm sind. Die zugesetzte Wassermenge wurde dabei so berechnet, daß der Farbstoffgehalt in der nach dem Aufmahlen erhaltenen Flüssigpräparation 17 % beträgt.
d) Wird die nach lc) hergestellte Flüssigpräparation mit einem Druck von ca. 3 kp/m² durch eine Düse aus VA-Stahl mit einem Durchmesser von 0,7 mm gedrückt, so ist ein exaktes, wiederholtes Dosieren möglich. Wird dagegen eine Flüssigpräparation eingesetzt, die wie unter lc) beschrieben aus einem Farbstoff hergestellt wurde, der der Hitzebehandlung gemäß 1b) nicht unterworfen wurde und in der α-Modifikation vorliegt, so kommt es beim Dosieren zu spritzender Abgabe von Farbstoff aus der Düse bzw. zu einer vollständigen Verstopfung.

### Beispiel 2

a) 100 g des nach 1a) hergestellten Farbstoffs werden mit 80 g eines Kondensationsproduktes aus m-Kresol, Phenol, Nonylphenol, Formaldehyd und Natriumbisulfit in 400 ml Wasser bei einem pH-Wert von 4,5 2 Stunden unter Rückfluß erhitzt. Dann werden 90 g eines Natriumligninsulfonats zugesetzt und der Anschlag wurde bei pH 8 in einer Sandmühle bis zu der in 1c) angegebenen Feinverteilung aufgemahlen. Der so erhaltene Mahlteig wird in einem Sprühtrockner bei einer Eingangstemperatur von 155°C und einer Ausgangstemperatur von 85°C sprühgetrocknet.
b) Wird das nach 2a) erhaltene Pulver zur Herstellung einer Färbeflotte in Wasser gegeben, so dispergiert es teilweise schon beim Absinken auf den Gefäßboden und vollständig nach kurzem Umrühren.
c) Eine Pulverpräparation, die entsprechend den Angaben in 2a), aber ohne die dort beschriebenen Hitzebehandlung hergestellt wurde, also aus Farbstoff in der α-Modifikation hergestellt wurde, muß demgegenüber bis zum Erhalt einer homogenen Dispersion mit einem speziellen Rührer längere Zeit gerührt und evt1. anschließend filtriert werden, um stippenfreie Färbungen zu erhalten.
d) Werden mit der gemäß 2a) hergestellten Pulverpräparation Kreuzspulen gefärbt, so sind die erhaltenen Färbungen egal und reibecht, d.h. die Farbtiefen in den äußeren und inneren Lagen des Wickelkörpers sind gleich, und es kommt nicht zu Farbstoffablagerungen

### Beispiel 3

172,5 g 2-Chlor-4-nitroanilin werden entsprechend la) in konzentrierter Schwefelsäure mit 325 g 40 Gew.-%iger Nitrosylschwefelsäure diazotiert, und die so erhaltene Diazolösung wird in Gegenwart von 5 g eines Fettalkoholpolyethylenglykolethers auf Basis von ungesättigtem C₁₆-C₁₈-Fettalkohol sowie 3 g eines Natriumligninsulfonats auf 250 g N-(2-Cyanethyl)-N-(2-phenylethyl)anilin gekuppelt Der Fettalkoholpolyethylenglykolether enthält pro Mol Fettalkohol ca. 20 CH₂CH₂O-Einheiten und hat einen HLB-Wert von 15. Nach Filtration und Waschen mit Wasser wird der erhaltene Preßkuchen, in dem der Farbstoff in der β-Modifikation vorliegt, die das in Figur 3 wiedergegebene Röntgenbeugungsdiagramm aufweist, entsprechend den Angaben im Beispiel 1c) in eine Flüssigpräparation überführt, die ebenfalls alle technischen Anforderungen erfüllt.

### Beispiel 4

10 g des nach den Angaben im Beispiel la) hergestellten Farbstoffs, der anschließend bis zur Gewichtskonstanz getrocknet wurde und ebenfalls in der α-Modifikation vorliegt, werden aus 100 ml Toluol umkristallisiert. Der umkristallisierte Farbstoff liegt in der β-Modifikation vor und läßt sich in Flüssig-, Pulver- oder Granulatpräparationen überführen, die ebenfalls alle technischen Anforderungen erfüllen.

### Beispiel 5

Zur Herstellung des Farbstoffs der Formel (I) in der γ-Modifikation werden zunächst 10 g eines Arylphenolpolyglykolethers (Umsetzungsprodukt aus Benzylphenylphenol + 14 Ethylenoxid) und 500 g (2,9 mol) 2-Chlor-4-nitroanilin in 420 ml Wasser eingetragen, mit Wasser auf 1850 ml aufgefüllt und in einem Zerkleinerungsvorgang in eine feine Suspension überführt. Es wurden 1000 ml konzentrierte Salzsäure (35 %) zugegeben und anschließend unter 0°C abgekühlt. Es wurde mit Natriumnitritlösung diazotiert und 2 Stunden mit Nitritüberschuß nachgerührt. Man erhielt eine Lösung des Diazoniumsalzes mit einer Ausbeute von >98 % der Theorie, bezogen auf 2-Chlor-4-nitroanilin Die salzsaure Diazoniumsalzlösung wurde bei 20 bis 25°C innerhalb von 2 bis 2 1/2 Stunden auf eine fein gemahlene Suspension aus 733 g (2,9 mol) N-(2-Cyanethyl)-N-(2-phenylethyl)-anilin, 2,4 g (0,02 mol) Amidosulfonsäure, 10 g eines Kraft-Ligninsulfonats, 16 g eines Fettalkoholpolyglykolethers (Umsetzungsprodukt eines C₁₆-C₁₈-Alkohols mit 20 Mol Ethylenoxid) und 2000 ml Wasser gegeben.

Nach Filtration und Waschen des Filterkuchens mit Wasser wurde ein wasserfeuchter Preßkuchen erhalten, in dem der Farbstoff in der γ-Modifikation vorliegt. Das entsprechende Röntgenbeugungsdiagramm ist in Fig. 1 abgebildet.
33,4 Teile (100 %) des so erhaltenen Farbstoffs wurden zusammen mit
28,2 Teile Ligninsulfonat,
27,2 Teile Kondensationsprodukt aus Naphthalinsulfonsäure und Formaldehyd,
1,0 Teile nichtionisches Tensid,
1,0 Teile Netzmittel,
0,2 Teile Entschäumer,
in einer Perlmühle bis zur erforderlichen Feinverteilung gemahlen.

Anschließend wurden der Suspension 1,0 Teil Entstaubungsmittel (Basis: Mineralöle) zugesetzt und das Wasser über Sprühtrocknung entzogen. (Restfeuchte = 8 %)

### Anwendungsbeispiel 1

2 g der nach Beispiel 5 erhaltenen festen granulierten Farbstoffpräparation wurden in 1.000 g Wasser dispergiert. Die Dispersion wurde mit 0,5 bis 2 g/l eines handelsüblichen Dispergiermittels auf Basis eines Kondensationsproduktes aus Naphthalinsulfonsäurenatriumsalz und Formaldehyd 0,5 bis 2 g/l Mononatriumphosphat und 2 g eines handelsüblichen Egalisierhilfsmittels (vom Typ Ölsäure/Nonylphenol umgesetzt mit Ethylenoxid) versetzt und mit Essigsäure auf einen pH-Wert von 4,5 bis 5,5 gestellt. In die so erhaltene Färbeflotte brachte man 100 g eines texturierten Polyestergewebes auf Basis Polyethylenglykolterephthalat ein und färbte 60 Minuten bei 130°C.

Die resultierende Färbung ist egal und reibecht, Innen- und Außenanlagen der Kreuzspule sind gleichmäßig eingefärbt, Ablagerungen von Farbstoff auf dem Substrat sind nicht feststellbar.

### Vergleichsbeispiel 1

Man verfährt gemäß Anwendungsbeispiel 1, setzt jedoch an Stelle des Farbstoffs der γ-Modifikation gemäß Beispiel 5 den Farbstoff mit der instabilen α-Modifikation gemäß obigem Beispiel 1 ein.

Schon während der Aufheizphase der Färbeflotte brach die Dispersionsstabilität des Farbstoffs in der α-Modifikation in der Färbeflotte teilweise zusammen, wodurch es zu Ausfällungen sowie zu einem Druckanstieg im Färbeapparat kam. Das gefärbte Textilmaterial zeigte deutlichen Abrieb (Farbstoffablagerung auf der Faseroberfläche sowie deutliche Farbstärkeunterschiede zwischen den äußeren und inneren Lagen des Wickelkörpers auf; die sogenannten AMI (Außen-Mitte-Innen) Effekte.

## Patentansprüche

1. Farbstoff der Formel (I) in der β- oder γ-Modifikation 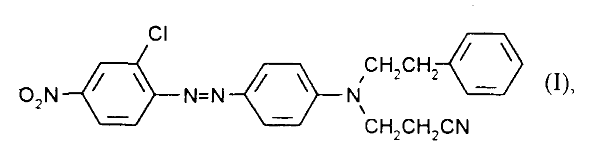 die im Röntgenbeugungsdiagramm (Cu-K_{α}-Strahlung) jeweils Linien bei folgenden Beugungswinkeln 2 Θ (°) aufweist:
β-Modifikation
Linien starker Intensität:
4,9; 13,95; 17,15; 19,5; 21,85; 25,2; 26,05; 28,75;
Linien mittlerer Intensität:
16,0; 24,3; 27,3; 30,0; 31,15.
γ-Modifikation
Linien starker Intensität:
11,57; 14,90; 17,14; 20,64; 24,35; 25,05; 26,37;
Linien mittlerer Intensität:
10,26; 13,71; 16,81; 18,71; 20,94; 22,07; 23,84; 28,81; 29,69.

2. Verfahren zur Herstellung der β-Modifikation des Farbstoffs der Formel (I) gemäß Anspruch 1, dadurch gekennzeichnet, daß der Farbstoff, der in der α-Modifikation vorliegt, in wäßriger Phase auf Temperaturen von 70 bis 150°C erhitzt wird.

3. Verfahren gemäß Anspruch 2, dadurch gekennzeichnet, daß das Erhitzen in Gegenwart einer oder mehrerer oberflächenaktiver Substanzen erfolgt

4. Verfahren gemäß Anspruch 2 und/oder 3, dadurch gekennzeichnet, daß das Erhitzen in Gegenwart eines oder mehrerer organischer Lösungsmittel erfolgt.

5. Verfahren zur Herstellung der β-Modifikation des Farbstoffs der Formel (I) gemäß Anspruch 1, dadurch gekennzeichnet, daß man den Farbstoff, der in der α-Modifikation vorliegt, aus einem Lösungsmittel oder Lösungsmittelgemisch umkristallisiert.

6. Verfahren zur Herstellung der β- oder γ-Modifikation des Farbstoffs der Formel (I) gemäß Anspruch 1 durch Kupplung von diazotiertem 2-Chlor-4-nitroanilin auf N-(2-Cyanethyl)-N-(2-phenylethyl)anilin, dadurch gekennzeichnet, daß die Kupplung, in Gegenwart eines oder mehrerer Hilfsstoffe aus der Reihe der tertiären Phosphorsäureester von Fettalkoholen und/oder Fettalkoholpolyethylenglykolethern; der tertiären Phosphorsäureester von Fettalkoholpolyethylenglykolethern und/oder Polyethylenglykolen; der Fettalkoholpolyethylenglykolether; der Fettsäurepolyethylenglykolester; der Tributylphenylpolyethylenglykolether; und der Nonylphenylpolyethylenglykolether und in Abwesenheit eines Esters aus einer gegebenenfalls substituierten niederaliphatischen Carbonsäure und eines gegebenenfalls substituierten aliphatischen Alkohols erfolgt.

7. Verfahren gemäß Anspruch 6, dadurch gekennzeichnet, daß in Gegenwart eines oder mehrerer Fettalkoholpolyethylenglykolether gekuppelt wird

8. Verfahren gemäß Anspruch 6 zur Herstellung der β-Modifikation, dadurch gekennzeichnet, daß die Kupplung in Gegenwart von Schwefelsäure erfolgt

9. Verfahren gemäß Anspruch 6 zur Herstellung der γ-Modifikation, dadurch gekennzeichnet, daß die Kupplung in Gegenwart von HCl erfolgt.

10. Verwendung der β- oder γ-Modifikation des Farbstoffs der Formel (I) gemäß Anspruch 1 zur Herstellung von flüssigen oder festen Farbstoffpräparationen.

11. Verwendung der β- oder γ-Modifikation des Farbstoffs der Formel (I) gemäß Anspruch 1 zum Färben und Bedrucken von Textilmaterialien aus Polyester und/oder Celluloseestern oder von Mischgeweben aus diesen Materialien und Wolle oder Cellulose

12. Feste Farbstoffpräparationen, enthaltend
10 bis 50 Gew.-% mindestens eines Farbstoffs, der der Formel (I) in der β- oder γ-Modifikation gemäß Anspruch 1 entspricht,
10 bis 80 Gew.-% Ligninsulfonat
0 bis 20 Gew.-% eines Kondensationsprodukts aus Naphthalinsulfonsäure und Formaldehyd
0 bis 10 Gew.-% nichtionisches Tensid
0 bis 1,5 Gew.-% Netzmittel
0 bis 1,0 Gew.-% Entschäumer
bis 12 Gew.-% Wasser (Restfeuchte)
bis 1,5 Gew.-% Entstaubungsmittel,
bezogen auf die Farbstoffpräparation.

## Claims

1. Dye of the formula (I) in the β- or γ-form 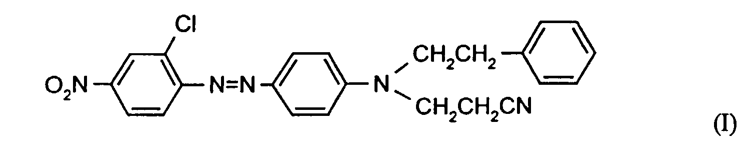 which in the x-ray diffraction diagram (Cu-K_{α} radiation) each have lines at the following diffraction angles 2 Θ (°):
β-form
Lines of high intensity:
4.9, 13.95, 17.15, 19.5, 21.85, 25.2, 26.05, 28.75,
Lines of medium intensity:
16.0, 24.3, 27.3, 30.0, 31.15,
γ-form
Lines of high intensity:
11.57, 14.90, 17.14, 20.64, 24.35, 25.05, 26.37,
Lines of medium intensity:
10.26, 13.71, 16.81, 18.71, 20.94, 22.07, 23.84, 28.81, 26.69.

2. Process for preparing the β-form of the dye of the formula (I) as set forth in Claim 1, characterized in that the dye, which is in the α-form, is heated to temperatures of 70 to 150°C in aqueous phase.

3. Process according to Claim 2, characterized in that the heating is effected in the presence of one or more surface-active substances.

4. Process according to Claim 2 and/or 3, characterized in that the heating is effected in the presence of one or more organic solvents.

5. Process for preparing the β-form of the dye of the formula (I) as set forth in Claim 1, characterized in that the dye, which is in the α-form, is recrystallized from a solvent or solvent mixture.

6. Process for preparing the β- or γ-form of the dye of the formula (I) as set forth in Claim 1 by coupling diazotized 2-chloro-4-nitroaniline onto N-(2-cyanoethyl)-N-(2-phenylethyl)aniline, characterized in that the coupling is effected in the presence of one or more auxiliaries selected from the group consisting of the tertiary phosphoric esters of fatty alcohols and/or fatty alcohol polyethylene glycol ethers, the tertiary phosphoric esters of fatty alcohol polyethylene glycol ethers and/or polyethylene glycols, the fatty alcohol polyethylene glycol ethers, the fatty acid polyethylene glycol esters, the tributylphenyl polyethylene glycol ethers and the nonylphenyl polyethylene glycol ethers and in the absence of an ester of an optionally substituted lower aliphatic carboxylic acid and of an optionally substituted aliphatic alcohol.

7. Process according to Claim 6, characterized in that the coupling is effected in the presence of one or more fatty alcohol polyethylene glycol ethers.

8. Process according to Claim 6 for preparing the β-form, characterized in that the coupling is effected in the presence of sulphuric acid.

9. Process according to Claim 6 for preparing the γ-form, characterized in that the coupling is effected in the presence of HCl.

10. Use of the β- or γ-form of the dye of the formula (I) as set forth in Claim 1 for preparing liquid or solid dye preparations.

11. Use of the β- or γ-form of the dye of the formula (I) as set forth in Claim 1 for dyeing and printing textile materials composed of polyester and/or cellulose esters or blends of these materials and wool or cellulose.

12. Solid dye preparations comprising
10 to 50% by weight of at least one dye conforming to the formula (I) in the β- or γ-form of Claim 1,
10 to 80% by weight of ligninsulphonate,
0 to 20% by weight of a condensation product of naphthalenesulphonic acid and formaldehyde,
0 to 10% by weight of nonionic surfactant,
0 to 1.5% by weight of wetting agent,
0 to 1.0% by weight of defoamer,
up to 12% by weight of water (residual moisture)
up to 1.5% by weight of dustproofing agent,
based on the dye preparation.

## Revendications

1. Colorant de formule (I) sous forme β ou sous forme γ : 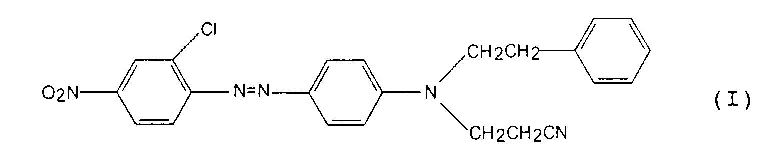 qui présente dans le diagramme de diffraction des rayons X (rayonnement Cu-Kα), chaque fois, des lignes pour les angles de diffraction 2θ suivants (°) :
Forme β :
Lignes d'intensité forte :
4,9 ; 13,95 ; 17,15 ; 19,5 ; 21,85 ; 25,2 ; 26,05 ; 28,75 ;
Lignes d'intensité moyenne :
16,0 ; 24,3 ; 27,3 ; 30,0 ; 31,15.
Forme γ :
Lignes d'intensité forte :
11,57 ; 14,90 ; 17,14 ; 20,64 ; 24,35 ; 25,05 ; 26,37 ;
Lignes d'intensité moyenne :
10,26 ; 13,71 ; 16,81 ; 18,71 ; 20,94 ; 22,07 ; 23,84 ; 28,81 ; 29,69.

2. Procédé de préparation de la forme β du colorant de formule (I) suivant la revendication 1, caractérisé en ce que le colorant, qui est présent sous la forme α, est chauffé en phase aqueuse à des températures allant de 70 à 150°C.

3. Procédé suivant la revendication 2, caractérisé en ce que le chauffage est réalisé en présence d'une ou de plusieurs substances tensioactives.

4. Procédé suivant les revendications 2 et/ou 3, caractérisé en ce que le chauffage est réalisé en présence d'un ou de plusieurs solvants organiques.

5. Procédé de préparation de la forme β du colorant de formule (I) suivant la revendication 1, caractérisé en ce que l'on recristallise le colorant, qui est présent sous la forme α, à partir d'un solvant ou d'un mélange de solvants.

6. Procédé de préparation de la forme β ou γ du colorant de formule (I) suivant la revendication 1, par couplage de la 2-chloro-4-nitroaniline diazotée sur la N-(2-cyanoéthyl)-N-(2-phényléthyl)aniline, caractérisé en ce que le couplage est réalisé en présence d'un ou de plusieurs auxiliaires de la série des esters phosphoriques tertiaires d'alcools gras et/ou de polyéthylèneglycoléthers d'alcools gras ; des esters phosphoriques tertiaires de polyéthylèneglycoléthers d'alcools gras et/ou de polyéthylèneglycols ; des polyéthylèneglycoléthers d'alcools gras ; des polyéthylèneglycolesters d'acides gras ; des polyéthylèneglycoléthers de tributylphényle et des polyéthylèneglycoléthers de nonylphényle et en l'absence d'un ester d'un acide carboxylique aliphatique inférieur facultativement substitué et d'un alcool aliphatique facultativement substitué.

7. Procédé suivant la revendication 6, caractérisé en ce que l'on réalise le couplage en présence d'un ou de plusieurs polyéthylèneglycoléthers d'alcool gras.

8. Procédé suivant la revendication 6, pour la préparation de la forme β, caractérisé en ce que le couplage est réalisé en présence d'acide sulfurique.

9. Procédé suivant la revendication 6, pour la préparation de la forme γ, caractérisé en ce que le couplage est réalisé en présence d'HCl.

10. Utilisation de la forme β ou γ du colorant de formule (I) suivant la revendication 1, pour la préparation de préparations liquides ou solides du colorant.

11. Utilisation de la forme β ou γ du colorant de formule (I) suivant la revendication 1, pour la teinture et l'impression de matières textiles en polyester et/ou esters de cellulose ou de tissu mixtes de ces matériaux et de laine ou de cellulose.

12. Préparations solides de colorant, contenant :
10 à 50% en poids d'au moins un colorant, qui correspond à la formule (I) sous la forme β ou γ suivant la revendication 1,
10 à 80% en poids de sulfonate de lignine,
0 à 20% en poids d'un produit de condensation de l'acide naphtalènesulfonique et du formaldéhyde,
0 à 10% en poids d'un tensioactif non ionique,
0 à 1,5% en poids d'agent mouillant,
0 à 1,0% en poids d'antimousse,
jusqu'à 12% en poids d'eau (humidité résiduelle),
jusqu'à 1,5% en poids d'agent de dépoussiérage,
sur base de la préparation de colorant.
